# EUROPEAN PATENT SPECIFICATION

(11) **EP 1 962 217 B1**
(45) Date of publication and mention of the grant of the patent: **11.12.2019**
(21) Application number: 08151638.7
(22) Date of filing: 19.02.2008
(51) Int. Cl.: G06F 21/00, G06F 21/12

(54) **SELF-DEFENSIVE PROTECTED SOFTWARE WITH SUSPENDED LATENT LICENSE ENFORCEMENT**
SICH SELBST DURCH VERZÖGERTE LATENTE ERZWUNGENE LIZENZIERUNG SCHÜTZENDE SOFTWARE
LOGICIEL PROTÉGÉ AUTO-DÉFENSIF DOTÉ D'APPLICATION SUSPENDUE LATENTE DE LA LICENCE

(30) Priority: 22.02.2007 US 710281
(43) Date of publication of application: 27.08.2008
(73) Proprietor: SafeNet Data Security (Israel) Ltd., 49511 Petach Tikva (IL)
(72) Inventor: Zunke, Michael, Kirchheim 85551 (DE); Margalit, Yanki, Ramat-Gan 52223 (IL); Margalit, Dany, Ramat Gan (IL)
(74) Representative: Scheer, Luc

(56) References cited:
- WO-A1-2005/122114
- US-A1- 2003 188 231
- Anonymous: "Richey's DELPHI-BOX", , 8 February 2006 (2006-02-08), XP055202022, Retrieved from the Internet: URL:https://web.archive.org/web/2006020808 4635/http://www.inner-smile.com/nocrack.ph tml [retrieved on 2015-07-13]

## Description

### FIELD OF THE INVENTION

The present invention relates to computer software protection and, more particularly, to a method and system for enhancing the ability of protected licensed computer software to withstand attack.

### BACKGROUND OF THE INVENTION

### Protected Software

A common way of enforcing a license regarding the usage rights of a software program (herein also denoted as a "program"; as "software"; as an "application"; and as variants thereof) is to furnish the program with executable code that regulates the usage of the program according to the terms and conditions under which the program is licensed to the user. Furnishing the program in such a manner is typically done by embedding the regulating executable code (herein denoted as "protective code") into the program, or, equivalently, by packaging the program and the protective code together within a single computer file (herein denoted as a "file"). Such a program is said to be "protected" (also denoted herein as "protected software") within a "protective envelope" (also denoted herein as an "envelope") which is made up of the protective code. In addition to monitoring and regulating program usage according to the license, the protective code typically performs other functions related to software protection. For example, the program may be encrypted, and may be decrypted by the protective code only immediately before execution. The terms "executable code", "executable program code", "executable software", "executable computer code", and "code" are herein used synonymously and denote instructions, statements, commands, or other directives which may be executed or interpreted by a computer to perform data handling and data processing operations. The term "executable program code" further is used herein to denote such code as recorded on machine-readable media, including, but not limited to: RAM; ROM; PROM; EPROM; EEPROM; Flash Memory; magnetic and optical recordable media; data storage devices; and computer network storage.

When the user runs a protected program by invoking the program's file on the computer, the protective code typically executes to perform initialization functions (such as decryption of the encrypted program, as noted previously). Thereafter, the protective code typically runs simultaneously with the program in the process background to monitor and regulate program usage according to the license terms. Typical license terms govern factors which may include, but are not limited to: the computer(s) on which the program can be run; the number of concurrent users; the time period(s) during which the program can be used; the number of times the program can be used; and the computer resources (e.g., file and network services) which the program can access.

### Attacks on Protected Software

Protected programs, however, are subject to attacks (also denoted in the art as "tampering") whose goals are to evade the license-regulating mechanisms. In one mode of attack, the attacker seeks to separate the program from the envelope in such a way that the protective code is removed, disabled, or bypassed. If the attack is successful, the program can be run in an unprotected fashion, without any regulation according to the license terms. The user can then operate the program contrary to the license agreement in an unauthorized manner. A program originally provided in an envelope but which has been successfully separated from the envelope in the above-described manner is commonly said to have been "cracked"; it is also commonly said that that protective envelope has been "cracked" - both expressions are taken to denote the same consequences for the program. In addition to allowing the attackers themselves to violate the license, the precise methods of cracking the program are often published in the form of executable code that disables the envelope. Moreover, cracked programs themselves are typically freely distributed, in further violation of the license agreement. The term "cracking attack" in the context of protected software herein denotes an attack whose characteristics and purpose are to remove, disable, or otherwise evade license protection for the software and thereby render the software usable in violation of one or more license terms thereof. The descriptions and references herein to "attacks", "attacking", "attacker", and so forth, are with respect to cracking attacks as so defined.

### Self-Defensive Software

There has been considerable effort made to provide protective code that can withstand such attacks. US 2003/188231 A1 discloses a method for runtime code integrity validation using code block checksums with action taken delayed from the detection of validation failure.

U.S. Patent Application Publication 2005/0183072 of Horning, et al., titled "Software self-defense systems and methods" (herein denoted as "Horning") provides an overview and survey of many details of cracking attacks and ways of defending the protective code against these attacks through the use of self-defensive programs (a self-defensive program is denoted in Horning as an "SDP"). Unfortunately, however, because software itself is inherently passive and visible, it is only a matter of time and motivation before suitably-skilled attackers can disable protective code, regardless of the self-defensive techniques employed.
The term "self-defensive" in the context of protected software herein denotes the inclusion of characteristics or features in the software, which are intended to resist attacks on the protective envelope.

U.S. Patent 6,463,538 to Elteto, titled "Method of software protection using a random code generator" (herein denoted as "Elteto") implements a defensive feature intended to thwart cracking attacks on a protected program by randomizing each instance of the protected program so that the protective code will differ substantially from one instance to the next, making it effectively impossible for the attacker to develop (and publish) a crack that would succeed in general for all (or many) different instances of the program. In theory, Elteto's approach is valid, but in practice it fails to solve the problem because an attacker need crack only a single instance of the protected program and then publish that cracked instance. Although publishing and distributing an entire program is more involved and cumbersome than publishing only the crack itself, the ever-increasing bandwidth of networks and the ease of network distribution, particularly over the Internet, ultimately make it just as feasible to publish the entire cracked program instance as it is to publish only the crack itself.

The limitations of the prior art, exemplified in Horning as well as the failure of Elteto and similar approaches to prevent cracking has led some to conclude that there is no decisive solution to the cracking problem in the realm of self-defensive programs - that self-defensive programming techniques, while useful, can never be sufficient. For example, U.S. Patent Application 2006/0174346 of Carroll, et al. entitled "Instrumentation for alarming a software product" (herein denoted as "Carroll") takes the approach that any software protection can ultimately be broken and discloses a scheme for signaling an alarm over the Internet when a software license is violated.

### Limitations of the Prior Art

A weakness of prior-art protection schemes, as exemplified by the above references, is that skilled attackers can often disable software protection within days (or even hours) of obtaining the protected software, and thereafter rapidly distribute the crack or the cracked program globally via the Internet. Even issuing a timely alarm (as provided by Carroll), is of limited value under such conditions. Moreover, whereas Carroll discloses collecting and transmitting information related to the identities of infringing *users,* Carroll does not disclose how it might be possible to collect and transmit information related to the identity of the *attacker* who cracked the program and enabled distribution of the unauthorized unprotected copies in the first place. This is noteworthy, because if legal action against infringement is contemplated, it is far more effective to prosecute the small number of infringing attackers rather than the large number of infringing users. A further weakness of Carroll is that attempts to signal an alarm over a network to a remote server are readily-detectable by an attacker, who can then pinpoint and disable the code in the program responsible for sending the alarm. In effect, then, the approach disclosed by Carroll introduces additional vulnerabilities which can be easily exploited by attackers.

### Cover Time

It is emphasized that an important and hitherto unaddressed factor in software licensing is that of "cover time" - which herein denotes an order-of-magnitude estimate of the amount of time available to a licensor of a licensed protected software product before a successful attack results in wide-scale distribution of cracked versions of the program. In many cases, the natural market obsolescence of commercial computer software means that distribution of unlicensed copies of a particular version of the software has only a time-limited impact on the licensor. When the licensor releases a newer version of the software to supersede previous versions, the availability of cracked older versions is often of little or no concern to the licensor. In fact, many licensors offer free licenses to use superseded versions of a program as a marketing aid for their latest release versions of the program.

Therefore, if the current release of a licensed software product can be provided with protection featuring a cover time comparable to the useful market life of that release, the software licensor would be adequately protected in spite of the fact that the software can be expected to be eventually cracked.

There is thus a need for, and it would be highly advantageous to have, a method and system for extending the cover time of protection for a licensed software product. This goal is met by the present invention.

### SUMMARY OF THE INVENTION

The present invention is of a method and system for extending the cover time for the protection of a licensed software product, by increasing the difficulty and time required for an attacker to produce a workable cracked version of the program. The present invention achieves this increased difficulty and time required for attack by suppressing the transmission of critical information about the effects of the attack to the attacker, thus disrupting the attack/response cycle, and thereby inducing the attacker to release a version of the program which has in fact not been successfully cracked, but which in fact retains protective capabilities.

The suppressing of transmission of critical information is accomplished by suspending the response of the self-defensive mechanisms of the program in such a manner as to simulate the behavior of a cracked program, thereby conveying a false impression to the attacker of the attack's effectiveness. The critical information that is thus withheld from the attacker is that the attack has not in fact succeeded in removing the protective capabilities of the software. Protected software according to embodiments of the present invention, in fact, continue to maintain a latent response capability to enforce the license, which is subsequently activated by one or more predetermined conditions according to specified rules.

Therefore, according to the present invention there is provided a method according to claim 1.

In addition, according to the present invention there is provided a system according to claim 9.

### BRIEF DESCRIPTION OF THE DRAWINGS

The invention is herein described, by way of example only, with reference to the accompanying drawings, wherein:
Figure 1 is a conceptual flowchart illustrating a typical mode of attack on prior-art protected software;
Figure 2 is a conceptual flowchart illustrating the attack mode of Figure 1 when used to attempt cracking protected software according to embodiments of the present invention;
Figure 3 is a conceptual block diagram illustrating a system of modules of protected software with suspended latent license enforcement according to embodiments of the present invention;
Figure 4 is a flowchart illustrating a method for responding to an attack according to embodiments of the present invention;
Figure 5 is a flowchart illustrating a method for enabling latent protection according to embodiments of the present invention.

### DESCRIPTION OF THE PREFERRED EMBODIMENTS

The principles and operation of a method and system for self-defensive protective software having suspended latent license enforcement according to embodiments of the present invention may be understood with reference to the drawings and the accompanying description.

### Additional Definitions

In addition to definitions of terms appearing elsewhere herein, there are the following term definitions:
The term "computer" herein denotes any device or apparatus capable of executing data processing instructions, including, but not limited to: personal computers; mainframe computers; servers; workstations; data processing systems and clusters; networks and network gateways, routers, switches, hubs, and nodes; embedded systems; processors, terminals; personal digital appliances (PDA); controllers; communications and telephonic devices; and memory devices, storage devices, interface devices, smart cards and tags, security devices, and security tokens having data processing and/or programmable capabilities.

The terms "computer memory" and "memory" herein denote any device or medium from which information may be retrieved on computer command, or which can both store and retrieve information on computer command, including, but not limited to: RAM; ROM; PROM; EPROM; EEPROM; Flash Memory; magnetic and optical recordable media; data storage devices; and computer network storage.

The term "loaded" in the context of executable software within a computer environment herein denotes that the software has been entered into the memory of a computer such that the computer is capable of executing the software. The terms "loaded image" and "image" in the context of executable software within a computer environment herein denote the version or copy of the executable software in computer memory which is executable by the computer. The term "running" in the context of executable software loaded on a computer herein denotes that the software is executing within a process of the computer, including, but not limited to, a background process.

As mentioned previously, the descriptions herein utilize the terms "protect", "protection", "protective", and so forth, in the context of licensed software to denote features and characteristics of the software to enforce license terms related to the software. The terms "defensive", "self-defensive", and so forth, however, denote features and characteristics of the software to resist attack, regarding both attacks on the software itself as well as attempts to disable the protection.

Enforcing a software license according to embodiments of the present invention includes, but is not limited to, the following protective measures which may be taken if terms and/or conditions of the software license are violated:
- disabling one or more features of the software;
- notifying the user of the software of a license
- violation; and
- notifying the software licensor of a license violation.

The terms "protective measure" and "measure" in the context of protective software, herein denote an action taken to enforce a software license, such as the above non-limiting examples thereof, and thereby denote a function performed by the protective code of protected software.

License terms and conditions typically include, but are not limited to, authorizing use of the software only:
- on specified computer(s);
- for specified user(s);
- on a maximum number of computers;
- for a maximum number of concurrent users;
- during specified time period(s); and
- for a specified number of times.

In addition, the term "module" in the context of computer software herein denotes a conceptual or functional identification of a software unit or subunit having executable computer code and/or data for accomplishing a specific purpose. The term "module" as used herein is not limited to contiguous executable code nor to software units or subunits which appear as integral elements in source code, object code, or binary code form. Rather, any collection of executable computer code and/or data which operates to accomplish an identified purpose is considered a "module" for accomplishing that purpose as defined herein.

The term "system" in the context of computer software and computer program products herein denotes a set of modules which function together for accomplishing a specific purpose.

The term "time-stamp" herein denotes any recorded information containing a function of time, including, but not limited to, the calendar date and the clock time (for example, the local date and clock time). Non-limiting examples of time-stamps typically present the time in a predetermined format and with a predetermined resolution, and which is current to a reasonable degree of accuracy at the time of the creation and recording of the information. Non-limiting examples of time-stamps conforming to the foregoing definition and suitable for use in embodiments of the present invention are found in the Internet Society's published document *RFC 3161 Internet X.509 Public Key Infrastructure Time-Stamp Protocol (TSP).* In addition, a time-stamp may also contain information about the geographical region thereof, such as time-zone information (e.g., a time-stamp reading "2006-12-21 06:32.57 EST", which specifies the United States Eastern Time zone).

### Typical Attack Mode for Cracking Protected Software

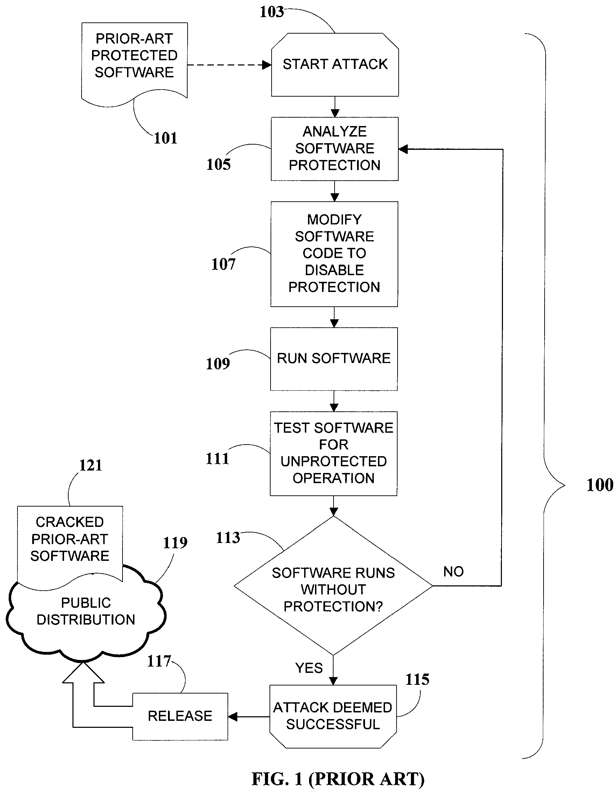

Figure 1 illustrates the general steps of a typical trial-and-error attack **100** on prior-art protected software **101.** At the attack start **103**, the attacker analyzes the software protection in a step **105**, and then modifies the software code in a step **107**, in an attempt to disable the protection. Step **107** may include, but is not limited to, procedures such as: overwriting the original program code of software **101** with substitute code; and loading software **101** into memory, launching program operation, and dumping the loaded memory image of software **101** to a file, in order to overcome encryption. Then in a step **109**, software **101** is run, and in a step **111** the attacker tests to see if software **101** is operating without protection. At a decision point **113**, if software **101** now runs without protection, then at a point **115** attack **100** is deemed to be successful, and in a step **117** software **101** is released as cracked software **121** via a distribution channel **119**, such as the Internet. If software **101** does not run without protection, then decision point **113** branches back to step **105** for further analysis, and the process repeats until attack **100** succeeds or the attacker gives up.

### Self-Defensive Protected Software According to the Present Invention

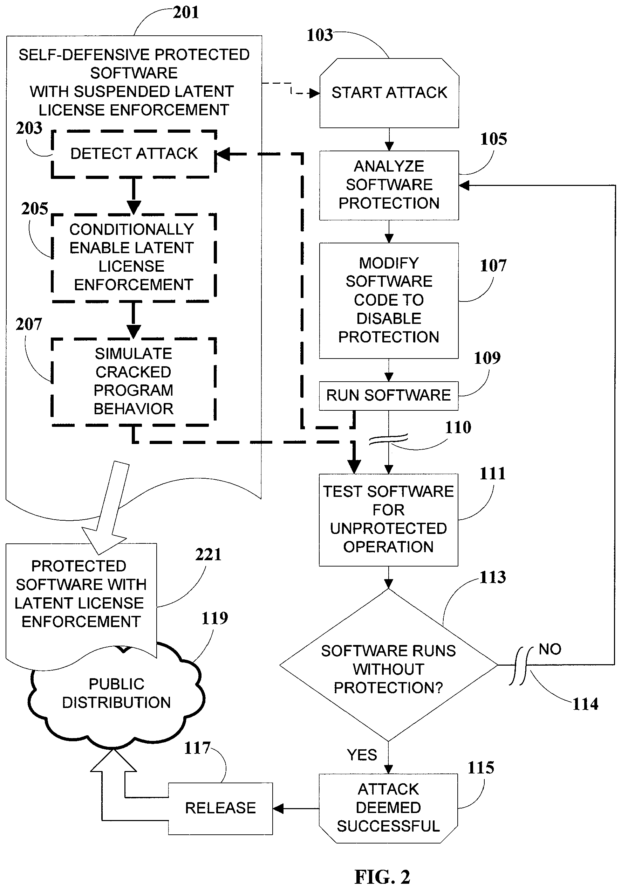

Figure 2 illustrates attack **100** (Figure 1) when used to attempt cracking protected software **201** according to embodiments of the present invention. The initial analysis **105**, modification **107**, and running **109** of the attack proceed in the same fashion as for prior-art protected software, as illustrated in Figure 1. When software **201** is run, however, a self-defensive step **203** detects that an attack is in progress and/or that steps of an attack have already been taken. The detection by step **203** initiates further self-defensive steps under control of software **201**, with the result that the running of software **201** in step **109** does not go directly to test step **111.** Effectively, a block **110** takes place, thereby disrupting the attack.

There are various ways of detecting that an attack is underway or has already taken place. As disclosed in Horning, for example, it is often possible for software **201** to detect if a debugger is in use. The use of a debugger is considered a likely indication that the software is under attack, so detecting that a debugger is currently executing software **201** serves as a means of detecting that an attack is in progress. Also, Carroll discloses that protected software can be presumed to have been attacked if a violation of the current license is detected. In addition, a method for directly determining that an attack has been made is disclosed in the co-pending US Patent Application of the present inventors entitled "Method for detecting that a protected software program is cracked", which was filed simultaneously with the present application.

### Cracked Program Simulation

Returning to Figure 2, self-defensive actions taken by software **201** continue after detecting the attack in step **203.** In a step **205**, latent license enforcement is conditionally enabled, as will be discussed below in further detail. In addition, a step **207** causes software **201** to simulate the behavior of a cracked program. Step **205** and step **207** may be performed in either order or simultaneously.

The terms "simulate", "simulation", and variants thereof, in the context of cracked software and the behavior thereof herein denote any procedure, process, method, or step for causing a protected software program to mimic, or to give the appearance of being cracked and/or having reduced or impaired protection, including, but not limited to, giving the appearance of lacking protective measures altogether. According to embodiments of the present invention, cracked program simulation is typically performed when a protective envelope is in place and is capable of providing license enforcement measures. In a non-limiting embodiment of the present invention, simulating the behavior of a cracked program is accomplished actively by presenting at least one program response that is, or would be, characteristic of a cracked version of the protected software program. In another non-limiting embodiment of the present invention, simulating the behavior of a cracked program is accomplished passively by disabling, suspending, inhibiting, bypassing, or otherwise preventing from operating at least one license-enforcement measure that would normally be taken by the protected program's protective envelope. In a further non-limiting embodiment of the present invention, simulating the behavior of a cracked program is accomplished by enabling the normal functioning of at least one feature of the protected software program that is subject to a license enforcement measure.

In a similar fashion the term "cracked program simulator", as well as variants thereof, denotes any device or executable code which is operative to simulate the behavior of a cracked program, as defined previously, including, but not limited to, active and passive means, as presented above. In yet a further non-limiting embodiment, a latent protective envelope (as detailed herein) is itself a cracked program simulator.

It is noted that simulating the behavior of a cracked program is an inventive step of the present invention - the prior art teaches away from this feature of the present invention: It is a teaching of the prior art that as soon as an attack is detected, the normal functioning of the program should be immediately restricted or prevented. For example, this is stated explicitly in Horning, paragraph 476 ("Useful functioning of the SDP should be restricted or prevented once tampering has been detected."). In contrast, the present invention discloses immediately enabling and facilitating the full functioning of the program as soon as an attack is detected. The present invention teaches that restricting and preventing useful functioning should be suspended, or held in abeyance, pending the occurrence of predetermined future conditions.

Thus, when the attacker performs tests **111** to determine if software **201** runs without protection at decision point **113**, tests **111** will return a confirmation so that the attack is always deemed successful at point **115.** Effectively, there is a block **114** so that the attack concludes at point **115.** Subsequently, release **117** occurs, resulting in the placement of protected software **221** being placed in distribution **119.** In certain descriptions and illustrations which follow, software **221** is presented as a non-limiting example of software according to embodiments of the present invention, which has been attacked and subsequently released by the attacker.

It is noted, however, that the status and condition of protected software **221** according to embodiments of the present invention is different from that of cracked prior-art software **121** (Figure 1): The protective envelope of cracked prior-art software **121** has been disabled, bypassed, or removed by attack **100**, whereas the protective code of protected software **221** according to embodiments of the present invention has not necessarily been entirely compromised. If the attack can be detected in step **203**, and simulated cracked program behavior is promptly initiated in step **207**, then further analysis (step **105**) and modification (step **107**) may be avoided, thereby leaving unaltered protective code in software **201** intact and operational, to be included within released software **221.**

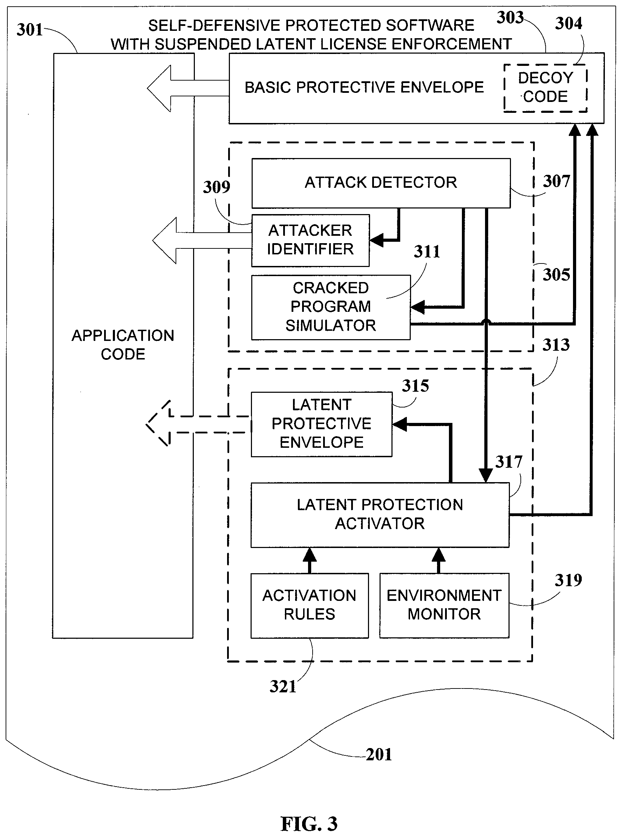

The above properties of self-defensive protected software **201** according to embodiments of the present invention are further illustrated in the conceptual system block diagram of Figure 3, to which reference is now made. In all cases, the functional blocks are software modules having executable code to achieve their desired functionalities as detailed below.

Self-defensive protected software **201** contains an application code module **301**, which is the executable code that performs the intended user functions of software **201.** A basic protective envelope **303** is the executable code which ensures that application code **301** is employed by the user in accordance with the license provisions established by the licensor. In a non-limiting embodiment of the present invention, protective envelope **303** includes decoy code **304**, which is protective code that is anticipated to be easily-recognized by an attacker, and which would be expected to be disabled promptly by an attacker. The use of decoy code according to this embodiment would thus serve to draw attention away from other protective code in software **201** and thereby reduce the likelihood that the attack would disable all the protective code.

### Self-Defensive Modules

A self-defensive group **305** of modules includes an attack detector **307**, which determines if software **201** is being attacked and/or has been attacked - in other words, that an attack has been initiated on software **201.** Means for performing such a detection have been discussed in detail previously. Certain embodiments of the present invention have associated with attack detector **307** an attacker identifier module **309**, whose function is to provide information which can identify, or assist in identifying, an attacker who is and/or who has carried out an attack on software **201.** A means of providing such information about an attacker is as follows:

### Information About the Attacker and the Attack

In many cases, an attacker outputs a memory dump of the application code (such as application code **301**) of an executing program to a file in order to crack the program. This is advantageous to the attacker, because doing so may allow capture of the decrypted (and operational) executable application code of an encrypted program without having to break the encryption itself (the protective code does the decryption before loading the image into computer memory). However, by including information about the computer and the user, as described above, the attacker may unknowingly also dump information about himself and his computer into the output file, especially if the information is encrypted so that the attacker cannot easily determine that such information about him and his computer is in the output file containing the executable application code. Therefore, by including such information in the image and later examining a cracked file (such as by extracting the computer-related data from the application code image, and analyzing the computer-related data, using the appropriate decryption keys, as necessary), it may be possible for the licensor to gain information about the identity of the computer and/or the attacker himself, as well as information relating to the environment of the attack (such as the time and geographical local of the attack) to aid in enforcement of the license. The term "attacker" herein denotes any person involved in a cracking attack on protected software.

Accordingly, attacker identifier **309** contains executable code for injecting information about the current user and current user environment into the application code image of loaded software **201** in computer memory. Such information includes, but is not limited to: data related to the configuration of the computer; a network address of the computer; machine name; MAC address; hard drive serial number; username; and personal data related to a user of the computer. Additionally, according to an embodiment of the present invention, the time of the attack is stored in a time-stamp. In further embodiments of the present invention, attacker identifier **309** further includes executable code for extracting such information from software **201** or the loaded image thereof. Thus, according to embodiments of the present invention, attacker identifier **309** provides information related to an attacker involved in an attack on software **201**, where "information related to an attacker" herein denotes information about the attacker personally and/or information about the computer which the attacker used in carrying out the attack. According to embodiments of the present invention, as described above, attacker identifier **309** stores information related to an attacker and retrieves information related to an attacker.

Returning to Figure 3, an additional module within self-defensive group **305** is a cracked program simulator **311**, which (as discussed previously) causes software **201** to mimic the behavior of a cracked program, even if a protective envelope (such as basic protective envelope **303**) is in place and has not been attacked. According to embodiments of the present invention, attack detector **307** activates cracked program simulator **311** to operate as soon as an attack is detected. According to non-limiting embodiments of the present invention, cracked program simulator **311** accomplishes this by programmatically disabling the license-enforcement features of protective envelopes, such as basic protective envelope **303.** In a related non-limiting embodiment, the programmatic disabling of license-enforcement features of protective envelopes is reversible - i.e., protective envelope features which are programmatically disabled by cracked program simulator **311** can be re-enabled programmatically.

Figure 3 also illustrates a latent protective group **313** according to an embodiment of the present invention, which includes a latent protective envelope **315.** The terms "latent protection", "latent protective envelope", and variants thereof herein denote a protective envelope which is normally not active, but which is capable of becoming active to enforce a license. The foregoing terms also relate to the actions and measures taken by a protective envelope to enforce one or more terms of a software license, as detailed elsewhere herein. In the context of a latent protective envelope, the terms "activate" and variants thereof herein denote the step of making a latent protective envelope become operational. According to embodiments of the present invention, activation of a latent protective envelope is subject to a pre-existing conditional enablement, as discussed in detail below in the sections "Attack Response" and "Activating Latent Protection".

According to certain non-limiting embodiments of the present invention, latent protective envelope **315** performs license enforcement features substantially comparable those of to basic protective envelope **303.** Also according to certain non-limiting embodiments of the present invention, latent protective envelope **315** includes at least some of the same executable code as that of basic protective envelope **303.**

### Environment and Environment Monitor

Latent protective envelope **315** is activated by a latent protection activator module **317**, which obtains information about the environment via an environment monitor **319.** According to an embodiment of the present invention, environment monitor **319** monitors environmental factors including, but not limited to: the current date and time; data related to the number of times software **201** has been loaded and run; data related to the computer upon which software **201** is running, such as a network address of the computer, machine name, MAC address, hard drive serial number; and data related to the user who is using the computer, such as username and other personal information. Any apparatus, system, device, or interface, including but not limited to software interfaces, data converters, and device drivers which is capable of presenting a data representation of the environment can be used as an environment monitor as defined herein. According to an embodiment of the present invention, a module in protective group **313** compares data from environment monitor **319** with data stored by attacker identifier **311** (as detailed above), and is able to determine (to a suitable degree of certainty, i.e., with a suitable overall probability that such a determination is correct), whether the computer on which software **201** is currently running is the same computer on which an attack on software **201** has been made.

### Use of the Same Logical Executable Code for Functionally Distinct Modules

Various non-limiting embodiments of the present invention provide for different modules as shown in Figure 3 to be implemented with common executable code. According to these embodiments, the functions performed by two different modules as shown in Figure 3 and discussed herein may be performed by the same logical executable code (that is, by executable code having the same address locations in memory). Thus, the functional differentiation of the modules presented herein does not imply that the executable code for performing the functions must necessarily be logically different or duplicated. In a non-limiting embodiment, for example, at least some of the functions of latent protective envelope **315** are performed by the same code which performs functions in basic protective envelope **303**; at least some of the functions of latent protection activator **317** are performed by the same code which performs functions in latent protective envelope **315**; and so forth. In other words, non-limiting embodiments of the present invention provide for functionally-different modules to contain at least some of the same executable code.

### Activation Rules

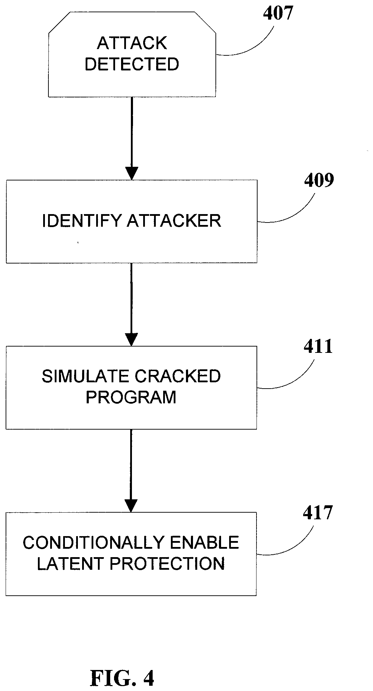

As shown in Figure 3 and Figure 4 (discussed below), a set of activation rules **321** specifies one or more conditions under which latent protection activator **317** activates latent protection envelope **315** in response to an attack (detected, for example, by attack detector **307**). This establishes a suspended latent license enforcement, whereby license enforcement is held in abeyance pending the occurrence of one or more predetermined conditions as specified in one or more activation rules.

Rules according to embodiments of the present invention include, but are not limited to:
- Time rule: the term "time rule" herein denotes an activation rule which contains, but is not limited to containing, a function of time. In a non-limiting embodiment of the present invention, a time rule provides that latent protection of software **221** (Figure 2) is activated after a predetermined time has transpired since the attack took place. Meeting a time rule condition can be determined by comparing a time-stamp stored at the time of the attack (as discussed in the previous section "Information About the Attacker and the Attack") with the current time.
- Number of uses rule: the term "number of uses rule" herein denotes an activation rule which contains, but is not limited to containing, a function of the number of times the protected software program has been launched (loaded and run). In a non-limiting embodiment of the present invention, a number of uses rule provides that latent protection of software **221** (Figure 2) is activated after a predetermined number of uses of software **221.** The number of uses may be recorded by incrementing a counter, such as in the operating system registry, each time software **221** is loaded and run. In an embodiment of the present invention, the counter is encrypted and the registry location is disguised. Meeting a number of uses condition can then be determined by comparing the value stored in the counter to a predetermined threshold.
- Computer rule: the term "computer rule" herein denotes an activation rule which contains, but is not limited to containing, a function of data related to the specific computer on which the protected software is running. In a non-limiting embodiment of the present invention, a computer rule provides that latent protection of software **221** (Figure 2) is activated only if the specific computer on which protected software **221** is running is different from the specific computer on which the attack was performed. That is, on the attacker's computer, protected software **221** continues to behave as cracked software, thereby suppressing the transmission of critical information about the attack from the attacker. Meeting a computer rule condition can be determined by comparing the identifying information about the computer on which the attack was performed (as discussed in the previous section "Information About the Attacker and the Attack") with identifying information about the computer on which software **221** is currently running.
- Random rule: the term "random rule" herein denotes an activation rule which contains, but is not limited to containing, a function of random or randomly-generated data. In a non-limiting embodiment of the present invention, a random rule provides that latent protection is activated randomly, such as according to a random number generator, so that the user can sometimes use software **221** (Figure 2), but only unpredictably and undependably. In an embodiment of the present invention, this rule is implemented by generating a random number, and considering that the condition of the rule is met if the generated random number falls within a predetermined range of numbers.
- Remote server rule: the term "remote server rule" herein denotes an activation rule which contains, but is not limited to containing, a function of data from a server or computer which is external to the computer on which the protected software is running. In a non-limiting embodiment of the present invention, a remote server rule provides that latent protection is activated according to a remote server on a network. In a non-limiting embodiment of the present invention, the user can use software **221** as a limited trial version as long as a remote server supplies an authorization, such as via the Internet. In a related embodiment of the present invention, when software **221** contacts the remote server for authorization, information about the user and the attacker (as detailed previously) is also supplied to the server.

According to embodiments of the present invention, activation rules (such as the rules above) may be combined logically. In a non-limiting example of such a combination, a time rule can establish a period during which software **221** (Figure 2) operates without any license enforcement, after which a random rule takes effect and unpredictably enforces the software license of software **221.**

### Attack Response

Figure 4 is a flowchart illustrating a method, such as performed by module **307** (Figure 3), for responding to an attack according to embodiments of the present invention. At a beginning point **407**, an attack is detected, as previously detailed. In a step **409**, such as performed by module **309** (Figure 3), the attacker is identified to the greatest extent possible (as detailed previously). Step **409** includes not only obtaining information about the attacker, but also placing this information (in encrypted form, according to a related embodiment of the present invention) into the memory image of application code **301** (Figure 3), so that it will be included in the executable binary file when dumped by the attacker. Next, in a step **411**, cracked program behavior is simulated, such as is done by cracked program simulator **311** (Figure 3). Finally, latent protection is conditionally enabled in a step **417.** There are a variety of ways in which latent protection can be conditionally enabled. In a non-limiting embodiment of the present invention, conditional enablement of latent protection is done via latent protection activator **317** (Figure 3), such as by a notification thereto. In another non-limiting embodiment of the present invention, conditional enablement is done via attack detector **307.** In a further non-limiting embodiment of the present invention, conditional enablement is made by writing a predetermined data value in a predetermined location.

The terms "conditionally enabled" and variants thereof, in the context of latent protection, herein denote that the latent protection and the protective measures thereof are not immediately made operational, but rather are allowed to become operational subject to the fulfillment of certain additional predetermined conditions. The terms "activate" and variants thereof in the context of latent protection herein denote that a conditionally-enabled latent protection measure is made operational to enforce a license term, by virtue of the fulfillment of at least one additional predetermined condition.

### Activating Latent Protection

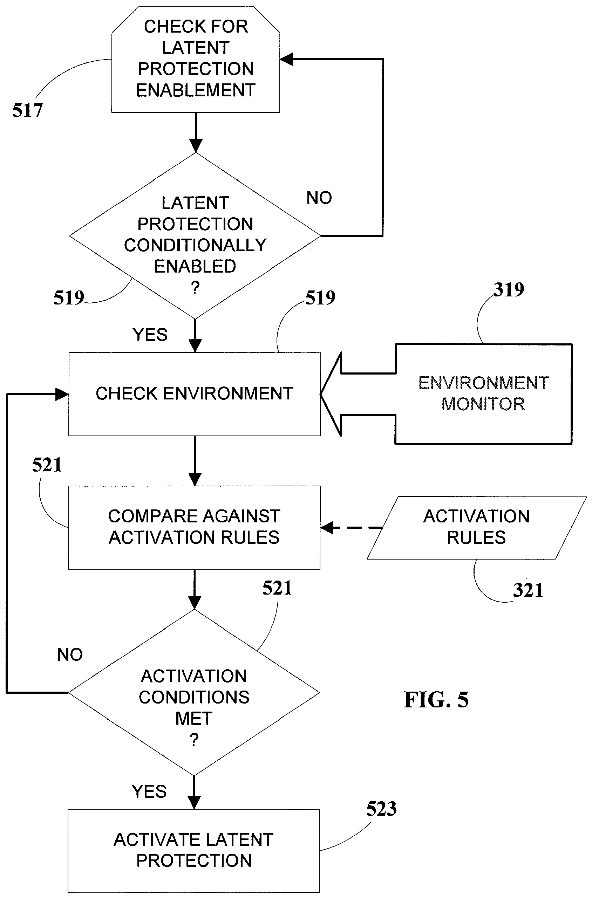

Figure 5 is a flowchart, such as performed by module **313** (Figure 3), illustrating a method for activating latent protection according to embodiments of the present invention. At a beginning point **517**, a check is made to see if latent protection has been conditionally enabled, such as via step **417** (Figure 4). At a decision point **519**, if latent protection has not been conditionally enabled, check **517** is repeated. Otherwise, if latent protection has been conditionally enabled, in a step **519**, the environment of software **221** (Figure 2) is checked via environment monitor **319,** as discussed in the previous section "Environment and Environment Monitor". In a step **521**, the current environment is compared against activation rules **321**, as discussed in the previous section "Activation Rules". At a decision point **521**, if activation conditions are not met, then step **519** is repeated. Otherwise, if activation conditions are met, then in a step **523**, latent protection, or at least one protective measure thereof, is activated, and at least one term of the software license of software **221** is enforced by the latent protection, as previously discussed.

### Computer Program Product

A further embodiment of the present invention provides a computer program product for performing a method disclosed in the present application or any variant derived therefrom. A computer program product according to this embodiment includes a system or set of executable commands for a computer, and is incorporated within machine-readable media including, but not limited to: magnetic media; optical media; computer memory; semiconductor memory storage; flash memory storage; and a computer network. The terms "perform", "performing", etc., and "run", "running", when used with reference to a computer program product herein denote the action of a computer when executing the computer program product, as if the computer program product were performing the actions. The term "computer" herein denotes any data processing apparatus capable of, or configured for, executing the set of executable commands to perform the foregoing method, including, but not limited to the devices as previously described as denoted by the term "computer".

While the invention has been described with respect to a limited number of embodiments, it will be appreciated that many variations, modifications and other applications of the invention may be made.

## Claims

1. A method for extending a cover time of protection on a licensed software by suppressing a transmission of information about a cracking attack on the licensed software, wherein the cracking attack is an attack whose characteristics and purpose are to remove, disable, or otherwise evade license protection for the software and thereby render the software usable in violation of one or more license terms,
the licensed software being executed by a computer,
- the method comprising:
- a) detecting (407), by the computer, the cracking attack on the licensed software;
being **characterized in that** ,upon detection, the method further comprises the following steps:
• b) simulating (411), by the computer, a cracked program behavior of the licensed software by using the licensed software;
• c) incrementing, by the computer, a counter each time the licensed software is loaded and executed;
• d) comparing, by the computer, the counter to a predetermined threshold of uses of the licensed software;
• e) activating (417), by the computer, only when the counter matches the threshold of uses of the licensed software, at least one latent protective measure; and
f) repeating, by the computer, while the counter does not match the threshold of uses of the licensed software, the simulating, incrementing and comparing steps.

2. The method of claim 1, wherein the counter is encrypted.

3. The method of claim 1 or 2, wherein the counter is recorded in a registry of an operating system of the computer.

4. The method of any of claims 1 to 3, wherein the method further comprises a storing, by the computer, of information related to an attacker involved in the cracking attack.

5. The method of claim 4, wherein the attacker information is stored in a memory image of the software code.

6. The method of claim 4 or 5, wherein the attacker information is stored in an encrypted form.

7. The method of any of claims 1 to 6, wherein the method further comprises a obtaining, by the computer, of information related to an environment of the use of the licensed software.

8. A computer program product comprising a set of executable commands for a computer, that when executed cause the computer to perform the method of any of claims 1 to 4.

9. A system (201) of modules of executable program code for extending a cover time of protection on a licensed software by suppressing a transmission of information about a cracking attack on the licensed software, wherein the cracking attack is an attack whose characteristics and purpose are to remove, disable, or otherwise evade license protection for the software and thereby render the software usable in violation of one or more license terms, the licensed software being executed by a computer, the system comprising:
- an attack detector (307) configured to detect the cracking attack on the licensed software;
- the system being **characterized by** a simulator (311) configured to simulate, upon detection, a behavior of the licensed software by using the licensed software; and
• the system being configured to:
• increment a counter to be each time the licensed software is loaded and executed;
• compare the counter to a predetermined threshold of uses of the licensed software;
• activate, by a latent protection activator (317), only when the counter matches the threshold of uses of the licensed software, at least one latent protective measure; the at least one latent protective measure being included in a latent protective envelope; and
• repeat while the counter does not match the threshold of uses of the licensed software, the simulation, the incrementation and the comparison.

10. The system of claim 9, wherein the simulator is included in the latent protective envelope.

11. The system of claim 9 or 10, wherein at least two of the attack detector, the simulator, the latent protective envelope, and the latent protection activator contain at least some of the same executable code.

12. The system of any of claims 9 to 11, further **characterized by** a basic protection envelope for providing normal license enforcement for the licensed software, and wherein at least two of the basic protection envelope, the attack detector, the simulator, the latent protective envelope, and the latent protection activator contain at least some of the same executable code.

13. The system of any of claims 9 to 12, wherein the system is further configured to provide information related to an attacker **by** an action selected from the group consisting of: retrieving the information related to the attacker and storing the information related to the attacker.

14. The system of any of claims 9 to 13, wherein the licensed software runs in an environment, and wherein the system is further configured to monitor the environment, and to provide information on the environmentto the latent protection activator.

15. The system of any of claims 9 to 14, wherein, the licensed software including a basic protective envelope, the basic protective envelope includes a decoy code.

## Patentansprüche

1. Verfahren zum Verlängern einer Schutzlaufzeit für eine lizensierte Software durch Unterdrücken einer Übertragung von Informationen über einen Cracking-Angriff auf die lizensierte Software, wobei es sich bei dem Cracking-Angriff um einen Angriff handelt, dessen Eigenschaften und Zweck darin bestehen, einen Lizenzschutz für die Software zu entfernen, zu deaktivieren oder anderweitig zu umgehen und dadurch die Software unter Verletzung einer oder mehrerer Lizenzbedingungen nutzbar zu machen, wobei die lizensierte Software durch einen Computer ausgeführt wird, wobei das Verfahren Folgendes umfasst:
a) durch den Computer erfolgendes Erfassen (407) des Cracking-Angriffs auf die lizensierte Software,
**dadurch gekennzeichnet, dass** bei Erfassung das Verfahren ferner die folgenden Schritte umfasst:
b) durch den Computer erfolgendes Simulieren (411) eines geknackten Programmverhaltens der lizensierten Software durch Verwenden der lizensierten Software,
c) durch den Computer erfolgendes schrittweises Erhöhen eines Zählers bei jedem Laden und Ausführen der lizensierten Software,
d) durch den Computer erfolgendes Vergleichen des Zählers mit einem vorab bestimmten Grenzwert von Nutzungen der lizensierten Software,
e) nur bei Übereinstimmung des Zählers mit dem Grenzwert der Nutzungen der lizensierten Software durch den Computer erfolgendes Aktivieren (417) mindestens einer verborgenen Schutzmaßnahme, und
f) solange Nichtübereinstimmung des Zählers mit dem Grenzwert der Nutzungen der lizensierten Software vorliegt, durch den Computer erfolgendes Wiederholen der Schritte des Simulierens, des schrittweisen Erhöhens und des Vergleichens.

2. Verfahren nach Anspruch 1, wobei der Zähler verschlüsselt ist.

3. Verfahren nach Anspruch 1 oder 2, wobei der Zähler in einem Register eines Betriebssystems des Computers verzeichnet ist.

4. Verfahren nach einem der Ansprüche 1 bis 3, wobei das Verfahren ferner ein durch den Computer erfolgendes Speichern von Informationen umfasst, die einen an dem Cracking-Angriff beteiligten Angreifer betreffen.

5. Verfahren nach Anspruch 4, wobei die Informationen über den Angreifer in einem Speicherabbild des Softwarecodes gespeichert werden.

6. Verfahren nach Anspruch 4 oder 5, wobei die Informationen über den Angreifer in verschlüsselter Form gespeichert werden.

7. Verfahren nach einem der Ansprüche 1 bis 6, wobei das Verfahren ferner ein durch den Computer erfolgendes Beziehen von Informationen umfasst, die eine Umgebung der Nutzung der lizensierten Software betreffen.

8. Computerprogrammprodukt, das einen Satz ausführbarer Befehle für einen Computer umfasst, die bei Ausführung den Computer veranlassen, das Verfahren nach einem der Ansprüche 1 bis 4 durchzuführen.

9. System (201) von Modulen von ausführbarem Programmcode zum Verlängern einer Schutzlaufzeit für eine lizensierte Software durch Unterdrücken einer Übertragung von Informationen über einen Cracking-Angriff auf die lizensierte Software, wobei es sich bei dem Cracking-Angriff um einen Angriff handelt, dessen Eigenschaften und Zweck darin bestehen, einen Lizenzschutz für die Software zu entfernen, zu deaktivieren oder anderweitig zu umgehen und dadurch die Software unter Verletzung einer oder mehrerer Lizenzbedingungen nutzbar zu machen, wobei die lizensierte Software durch einen Computer ausgeführt wird, wobei das System Folgendes umfasst:
- eine Angriffserfassungseinrichtung (307), die dafür konfiguriert ist, den Cracking-Angriff auf die lizensierte Software zu erfassen,
- wobei das System durch eine Simulationseinrichtung (311) **gekennzeichnet ist**, die dafür konfiguriert ist, bei Erfassung ein Verhalten der lizensierten Software durch Verwenden der lizensierten Software zu simulieren, und
- wobei das System konfiguriert ist, um
- bei jedem Laden und Ausführen der lizensierten Software einen Zähler schrittweise zu erhöhen,
- den Zähler mit einem vorab bestimmten Grenzwert von Nutzungen der lizensierten Software zu vergleichen,
- nur bei Übereinstimmung des Zählers mit dem Grenzwert der Nutzungen der lizensierten Software durch eine verborgene Schutzaktivierungseinrichtung (317) mindestens eine verborgene Schutzmaßnahme zu aktivieren, wobei die mindestens eine verborgene Schutzmaßnahme in einer verborgenen Schutzhülle enthalten ist, und
- solange Nichtübereinstimmung des Zählers mit dem Grenzwert der Nutzungen der lizensierten Software vorliegt, die Simulation, die schrittweise Erhöhung und den Vergleich zu wiederholen.

10. System nach Anspruch 9, wobei die Simulationseinrichtung in der verborgenen Schutzhülle enthalten ist.

11. System nach Anspruch 9 oder 10, wobei zumindest zwei der Angriffserfassungseinrichtung, der Simulationseinrichtung, der verborgenen Schutzhülle und der verborgenen Schutzaktivierungseinrichtung zumindest einen Teil des gleichen ausführbaren Codes enthalten.

12. System nach einem der Ansprüche 9 bis 11, ferner **gekennzeichnet durch** eine Grundschutzhülle zum Gewährleisten einer normalen Durchsetzung der lizensierten Software, wobei zumindest zwei der Grundschutzhülle, der Angriffserfassungseinrichtung, der Simulationseinrichtung, der verborgenen Schutzhülle und der verborgenen Schutzaktivierungseinrichtung zumindest einen Teil des gleichen ausführbaren Codes enthalten.

13. System nach einem der Ansprüche 9 bis 12, wobei das System ferner dafür konfiguriert ist, einen Angreifer betreffende Informationen durch eine Handlung bereitzustellen, die aus der Gruppe ausgewählt ist, die aus Abrufen der den Angreifer betreffenden Informationen und Speichern der den Angreifer betreffenden Informationen besteht.

14. System nach einem der Ansprüche 9 bis 13, wobei die lizensierte Software in einer Umgebung läuft und wobei das System ferner dafür konfiguriert ist, die Umgebung zu überwachen und Informationen über die Umgebung der verborgenen Schutzaktivierungseinrichtung bereitzustellen.

15. System nach einem der Ansprüche 9 bis 14, wobei die lizensierte Software eine Grundschutzhülle beinhaltet und die Grundschutzhülle einen Täuschcode beinhaltet.

## Revendications

1. Procédé pour prolonger un temps de couverture de protection sur un logiciel sous licence en supprimant une transmission d'informations concernant une attaque de craquage sur le logiciel sous licence, dans lequel l'attaque de craquage est une attaque dont les caractéristiques et le but sont de supprimer, de désactiver ou autrement de contourner la protection de licence du logiciel et rendre ainsi le logiciel utilisable en violation d'une ou de plusieurs termes de licence, ledit logiciel sous licence étant exécuté par un ordinateur,
- ledit procédé comprenant :
- a) une détection (407), par l'ordinateur, de l'attaque de craquage sur le logiciel sous licence ;
**étant caractérisé en ce que,** lors de la détection, le procédé comprend en outre les étapes suivantes :
• b) une simulation (411), par l'ordinateur, d'un comportement de programme craqué du logiciel sous licence en utilisant le logiciel sous licence ;
• c) une incrémentation, par l'ordinateur, d'un compteur à chaque fois que le logiciel sous licence est chargé et exécuté ;
• d) une comparaison, par l'ordinateur, du compteur à un seuil prédéterminé d'utilisations du logiciel sous licence ;
• e) une activation (417), par l'ordinateur, uniquement lorsque le compteur correspond au seuil d'utilisations du logiciel sous licence, d'au moins une mesure de protection latente ; et
• f) la répétition, par l'ordinateur, tant que le compteur ne correspond pas au seuil d'utilisation du logiciel sous licence, des étapes de simulation, d'incrémentation et de comparaison.

2. Procédé selon la revendication 1, dans lequel ledit compteur est chiffré.

3. Procédé selon la revendication 1 ou 2, dans lequel ledit compteur est enregistré dans un registre d'un système d'exploitation de l'ordinateur.

4. Procédé selon l'une des revendications 1 à 3, dans lequel ledit procédé comprend en outre un stockage, par l'ordinateur, d'informations liées à un attaquant impliqué dans l'attaque de craquage.

5. Procédé selon la revendication 4, dans lequel lesdites informations de l'attaquant sont stockées dans une image de mémoire du code de logiciel.

6. Procédé selon la revendication 4 ou 5, dans lequel lesdites informations de l'attaquant sont stockées sous une forme chiffrée.

7. Procédé selon l'une des revendications 1 à 6, dans lequel ledit procédé comprend en outre une obtention, par l'ordinateur, d'informations liées à un environnement d'utilisation du logiciel sous licence.

8. Produit-programme informatique comprenant un ensemble de commandes exécutables pour un ordinateur, qui, lorsqu'elles sont exécutées, amènent l'ordinateur à effectuer le procédé selon l'une des revendications 1 à 4.

9. Système (201) de modules de code de programme exécutable pour prolonger un temps de couverture de protection sur un logiciel sous licence en supprimant une transmission d'informations concernant une attaque de craquage sur le logiciel sous licence, dans lequel l'attaque de craquage est une attaque dont les caractéristiques et le but sont de supprimer, de désactiver ou autrement de contourner la protection de licence du logiciel et rendre ainsi le logiciel utilisable en violation d'un ou plusieurs termes de licence, le logiciel sous licence étant exécuté par un ordinateur, le système comprenant :
- un détecteur d'attaque (307) configuré pour détecter l'attaque de craquage sur le logiciel sous licence ;
le système **étant caractérisé par** un simulateur (311) configuré pour simuler, lors de la détection, un comportement du logiciel sous licence en utilisant le logiciel sous licence ; et
• le système étant configuré pour :
• incrémenter un compteur à chaque fois que le logiciel sous licence est chargé et exécuté ;
• comparer le compteur à un seuil prédéterminé d'utilisations du logiciel sous licence ;
• activer, par un dispositif d'activation de protection latente (317), uniquement lorsque le compteur correspond au seuil d'utilisations du logiciel sous licence, au moins une mesure de protection latente ; ladite au moins une mesure de protection latente étant incluse dans une enveloppe de protection latente, et
• répéter, tant que le compteur ne correspond pas au seuil d'utilisations du logiciel sous licence, la simulation, l'incrémentation et la comparaison.

10. Système selon la revendication 9, dans lequel ledit simulateur est inclus dans l'enveloppe de protection latente.

11. Système selon la revendication 9 ou 10, dans lequel au moins deux du détecteur d'attaque, du simulateur, de l'enveloppe de protection latente et du dispositif d'activation de protection latente contiennent au moins une partie du même code exécutable.

12. Système selon l'une des revendications 9 à 11, **caractérisé en outre par** une enveloppe de protection de base pour assurer l'application normale de la licence pour le logiciel sous licence, et
dans lequel au moins deux de l'enveloppe de protection de base, du détecteur d'attaque, du simulateur, de l'enveloppe de protection latente et du dispositif d'activation de protection latente contiennent au moins une partie du même code exécutable.

13. Système selon l'une des revendications 9 à 12, dans lequel ledit système est en outre configuré pour fournir des informations liées à un attaquant par une action choisie dans le groupe constitué par : une récupération des informations liées à l'attaquant et un stockage des informations liées à l'attaquant.

14. Système selon l'une des revendications 9 à 13, dans lequel ledit logiciel sous licence s'exécute dans un environnement, et dans lequel ledit système est en outre configuré pour surveiller l'environnement, et pour fournir des informations sur l'environnement au dispositif d'activation de protection latente.

15. Système selon l'une des revendications 9 à 14, dans lequel, ledit logiciel sous licence incluant une enveloppe de protection de base, ladite enveloppe de protection de base inclut un code leurre.
